# EUROPEAN PATENT SPECIFICATION

(11) **EP 0 958 130 B1**
(45) Date of publication and mention of the grant of the patent: **24.07.2002**
(21) Application number: 98925867.8
(22) Date of filing: 22.06.1998
(51) Int. Cl.: B29C 69/02, B29C 65/00, G09F 13/00

(54) **DECORATIVE AND PROMOTIONAL ITEM AND PROCESS OF ITS PRODUCTION IN A VACUUM FORMING MACHINE**
GEGENSTAND FÜR DEKORATIVE UND WERBEZWECKE SOWIE VERFAHREN ZU SEINER HERSTELLUNG IN EINER VAKUUMFORMMASCHINE
ARTICLE DECORATIF OU PUBLICITAIRE ET PROCEDE DE PRODUCTION DANS UNE MOULEUSE PAR ASPIRATION

(30) Priority: 20.06.1997 GR 97100245
(43) Date of publication of application: 24.11.1999
(73) Proprietor: Vavouras, Ioannis, 183 46 Athens (GR)
(72) Inventor: Vavouras, Ioannis, 183 46 Athens (GR)
(86) International application number: GR9800018
(87) International publication number: WO9858791

(56) References cited:
- EP-A- 0 441 051
- CH-A- 288 513
- CH-A- 378 034
- DE-A- 1 454 972
- FR-A- 959 285
- GB-A- 484 433
- US-A- 2 688 747
- US-A- 3 297 504
- US-A- 4 572 851
- US-A- 4 892 501
- US-A- 5 129 544

## Description

Vacuum forming of plastic sheets to produce a great variety of articles has nowadays been broadly used in industrial practices.

It is also broadly applicable in the prior art to manufacture an item in two pieces that are subsequently joined to provide the eventual three-dimensional product. Amongst others, one reason of making one item in two pieces connectable after their production is that of decreasing the cost of production.

By way of example, FR-959.285 (Martini) discloses a decorative item made from two plastic sheets, although not through vacuum forming, the purpose for doing so being to enable a two phase engagement procedure of the two portions in order to obtain at first the flat basement of the article and subsequently join the two pieces along the perimeter of the two mating parts.

US-3,297,504 (Brown et al) and US-4,572,851 (Fortuna) describe container articles made from two mating parts which are joined by firiction welding by rotating one part relatively to the other to frictionally heat and fuse the parts together to a state of non - relative rotatability.

The edges of the mating parts in either one of the above mentioned items in FR-959.285 or US-3,297,504 or US-4,572,851 are formed so as to allow introduction of a substantially linear edge of a male portion into an edge that is slightly tapered outwards in the female portion.

The present invention being directed towards producing fully three dimensional items or figures of a rather anomalous circumferential configuration, such as decorative Father Christmas representations, is incapable of using techniques of the prior art in order to attain acceptable assembly of one front and one rear portion of the intended three-dimensional item, since they are directed towards production of items from two mating parts which have either perfectly circular or smoothly curvilinear edges. For the assembly of the mating parts in the present invention, it is necessary to form the mating parts of the invention with a small difference in size and with a circumferential channel in each one of the mating parts that allows for a handy matching process to an abutment position with an accurately uniform depth of introduction of the relatively smaller portion into the relatively larger one along the relatively excessive perimeter of anomalous configuration.

It is therefore the object of the invention to propose a manufacturing process and an item produced thereof, wherein a fully three-dimensional item or figure, such as a decorative Father Christmas representation may be produced from two mating parts with a small difference in size and with a circumferential rectangular channel, identical in each one of the mating parts so as to provide centering surfaces between said two mating parts, that allows for a handy matching process of the relatively smaller portion into the relatively larger one.

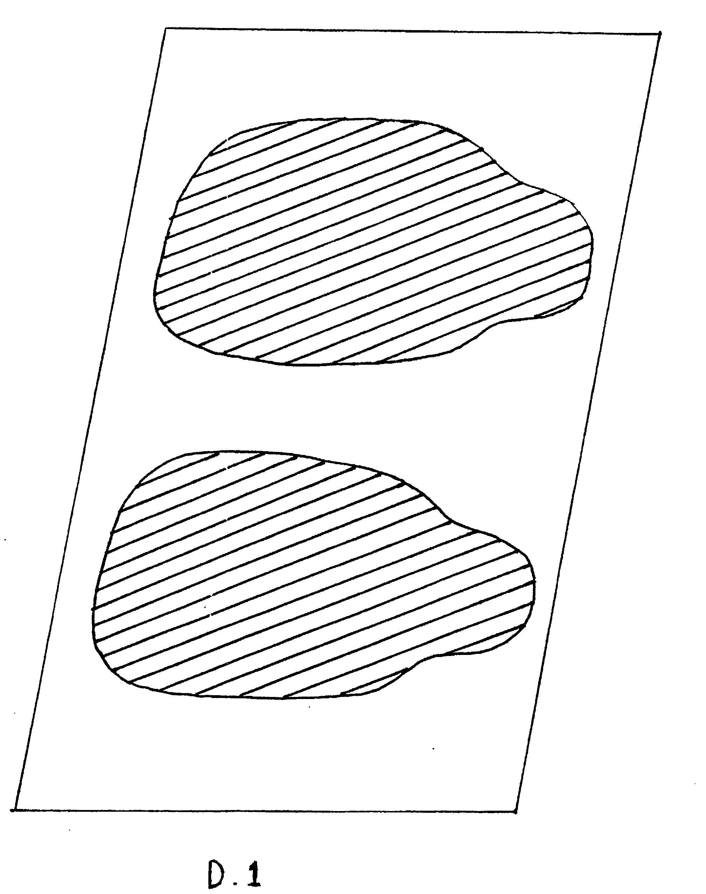

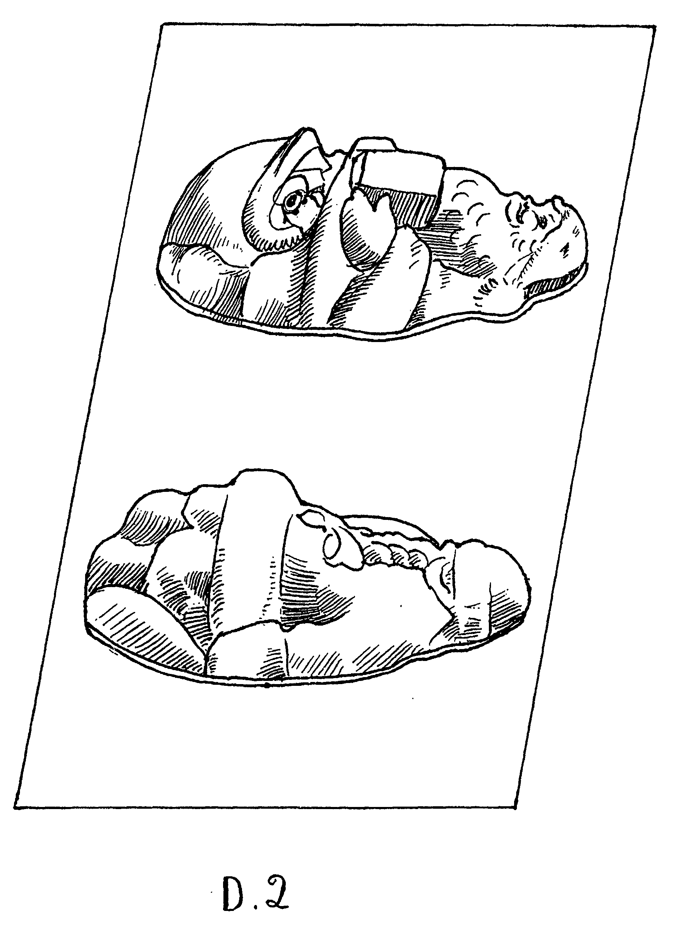

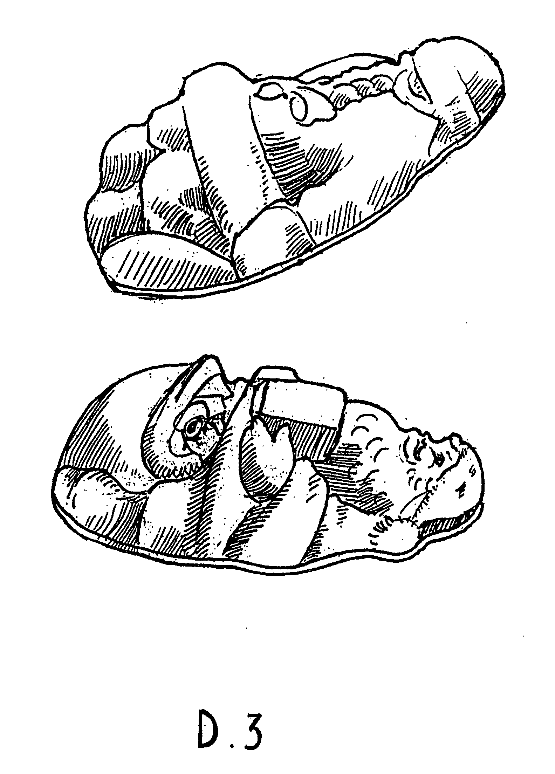

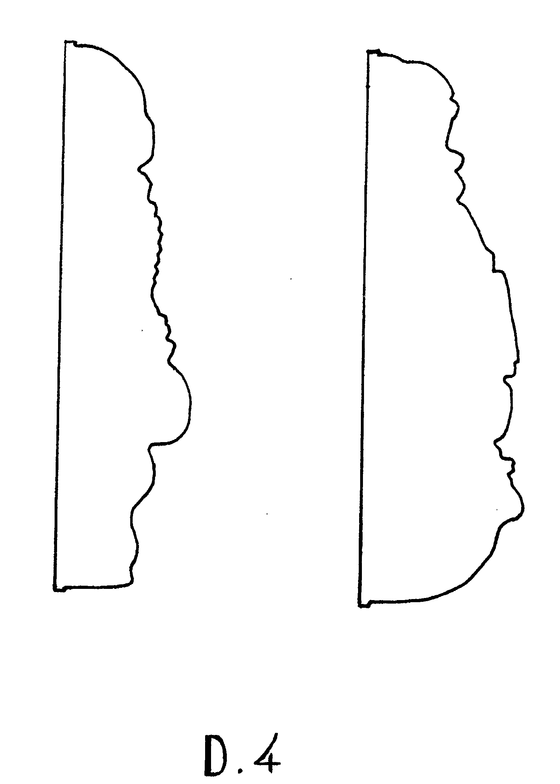

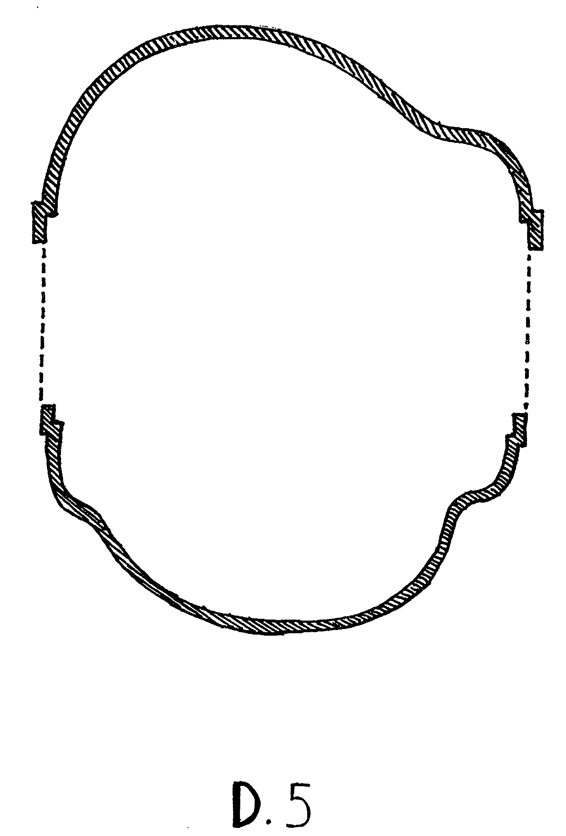

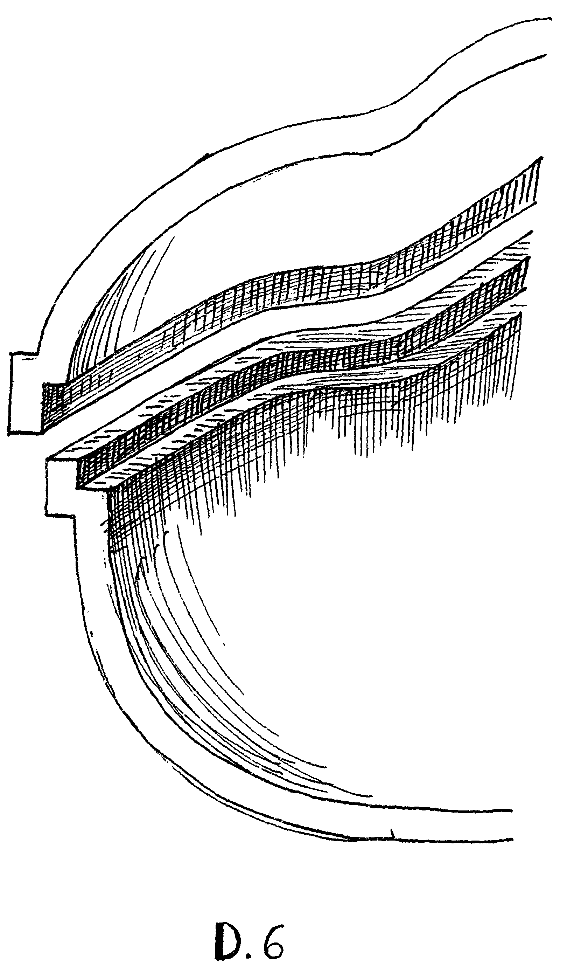

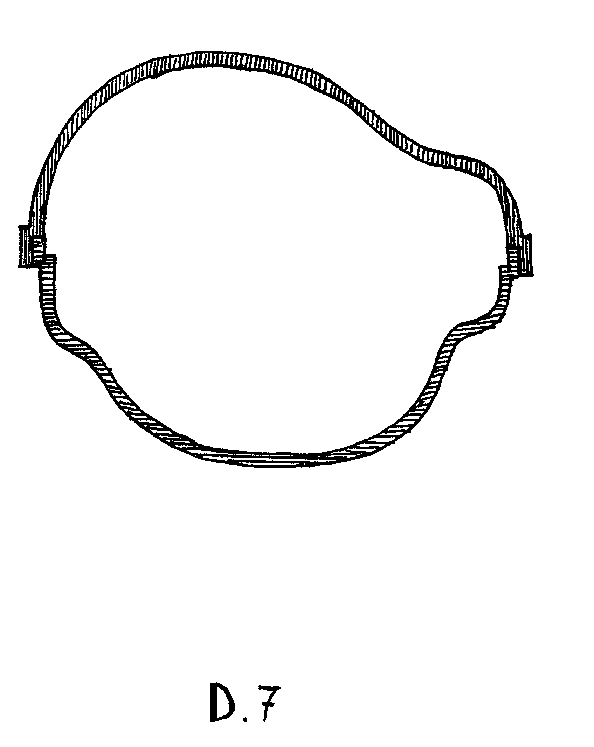

## Claims

1. Production procedure of decorative and promotional items comprising the steps of:
- printing two plastic sheets when flat into an offset or serigraphy printing machine;
- forming each one of the two printed plastic sheets in a vacuum forming machine to obtain two printed three-dimensional portions from said two printed plastic sheets, wherein one of said two printed three-dimensional portions is made slightly smaller than the other and wherein a canal of rectangular configuration is being formed around the circumference of each one of said two printed three-dimensional portions, said canal comprising a basement and a projecting end at right angles to said basement, so as to provide centering surfaces between said two printed three-dimensional portions;
- trimming off remaining flat area around each one of said two printed three-dimensional portions of the three-dimensional decorative and promotional item by driving the same under a horizontal cutter;
- bringing said two printed three-dimensional portions into matching contact by fitting said slightly smaller portion into the other relatively larger portion to an abutment position obtainable by the contact of the front end of the projecting end of said canal of rectangular configuration of said slightly smaller portion upon the basement of said canal of rectangular configuration of the other relatively larger portion thereby creating the three-dimensional decorative and promotional item.

2. Promotional or decorative item made up from two flat plastic sheets that are printed when flat and are then vacuum formed and circumferentially trimmed to obtain two printed three-dimensional portions of the promotional or decorative item, one of said two three-dimensional portions being slightly smaller that the other one of said two printed three-dimensional portions, each one of said two printed three-dimensional portions comprising a circumferential canal of rectangular configuration, said canal comprising a basement and a projecting end at right angles to said basement, so as to provide centering surfaces between said two printed three dimensional portions being brought into matching contact by fitting said slightly smaller printed three-dimensional portion into the other relatively larger portion to an abutment position obtainable by the contact of the front end of the projecting end of said canal of rectangular configuration of said slightly smaller portion upon the basement of said canal of rectangular configuration of the other relatively larger portion thereby creating the three-dimensional decorative and promotional item.

3. Promotional or decorative item as claimed in above claim 3, wherein the item is illuminated in its interior.

4. Application of the production procedure of decorative and promotional items according to the above claim 1 in the production of fully three-dimensional items or figures of a rather anomalous circumferential configuration, such as decorative Father Christmas representations.

5. The promotional or decorative item of claim 3 adapted to the form of a fully three-dimensional item or figure of a rather anomalous circumferential configuration, such as a decorative Father Christmas representation.

## Patentansprüche

1. Produktionsverfahren für Schmuck- und Werbungsgegenstände, bestehend aus folgenden Schritten:
- Zwei Plastikfolien drucken, wenn sie flach innerhalb einer Offset- oder Seidendruckmaschine liegen
- Jede der beiden gedruckten Plastikfolien innerhalb einer luftleerformenden Maschine formen, um zwei gedruckte, dreidimensionale Teile von den obenerwähnten zwei gedruckten Plastikfolien zu verschaffen, während einer der zwei gedruckten, dreidimensionalen Teile eigentlich etwas kleiner als der andere gemacht wird, und während es ein Kanal der rechteckigen Form rundum den Kreisumfang jeder der obenerwähnten gedruckten, dreidimensionalen Teile geformt wird, in dem der Kanal einen sozusagen "Erdgeschoss", sowie einen hervorragenden Rand an den rechten Ecken des vorher erwähnten Erdgeschosses umfasst, um zentrierte Oberflächen zwischen den zwei gedruckten, dreidimensionalen Teilen zu besorgen.
- Das übriggebliebene flache Gebiet um jenen der zwei gedruckten, dreidimensionalen Teile des dreidimensionalen Schmuck- und Werbungsgegenstandes durch Führung des Gegenstandes unter einem horizontalen Schneidegerät besetzen.
- Die obenerwähnten zwei gedruckten, dreidimensionalen Teile dadurch zueinander fixieren, dass der etwas kleinere Teil innerhalb des relativ größeren Teils in gegenüberliegender Position gebracht wird, die durch den Kontakt des vorderen Randes des hervorragenden Randes des Kanals der rechteckigen Konfiguration des etwas kleineren Teils oberhalb des "Erdgeschosses" des Kanals der rechteckigen Konfiguration des anderen, relativ größeren Teils erworben wird, so dass der dreidimensionale Schmuck- und Werbungsgegenstand hergestellt wird.

2. Werbungs- oder Schmuckgegenstand, hergestellt durch zwei flache Plastikfolien, die in flacher Position gedruckt, und danach mit Hilfe der Luftleermethode geformt, und in ihrem Kreisumfang besetzt werden, damit sie zwei gedruckten, dreidimensionalen Teile des Werbungs- oder Schmuckgegenstandes bekommen, wobei einer der obenerwähnten zwei dreidimensionalen Teile etwas kleiner ist, als der andere der zwei gedruckten, dreidimensionalen Teile, während jeder der obenerwähnten zwei gedruckten dreidimensionalen Teile einen Kanal im Kreisumfang der rechteckigen Konfiguration umfasst und der erwähnte Kanal einen Erdgeschoss und einen hervorragenden Rand bei den rechten Ecken zum obenerwähnten Erdgeschoss umfasst, damit zentrierte Oberflächen zwischen den zwei gedruckten, dreidimensionalen Teilen angeboten werden, die zu einander eng fixiert worden sind, indem der obenerwähnte, etwas kleinere gedruckte Teil innerhalb des anderen, relativ größeren Teils zu gegenüberliegender Position fixiert wird, die durch den Kontakt des vorderen Randes des hervorragenden Randes des Kanals der rechteckigen Konfiguration des obenerwähnten etwas kleineren Teils oberhalb des Erdgeschosses des Kanals der rechteckigen Konfiguration des anderen, relativ größeren Teils erreicht wird, und damit den dreidimensionalen Schmuck- und Werbungsgegenstand herstellt.

3. Werbungs- oder Schmuckgegenstand, beantragt wie in der Anforderung 3,wobeider Gegenstand sich in seinem Inneren widerspiegelt.

4. Beantragung zum Herstellungsverfahren des Schmuck- und Werbungsgegenstandes laut Anforderung 1 bei der Herstellung von vollkommen dreidimensionalen Gegenständen oder Figuren der eher anormalen Konfiguration des Kreisumfangs, wie zum Beispiel eine dekorative Darstellung von Weihnachten.

5. Der Werbungs - oder Schmuckgegenstand der Anforderung 3 angepasst in der Form eines vollkommen dreidimensionalen Gegenstandes oder einer gleichförmigen Figur einer eher anormalen Konfiguration des Unfanges, wie zum Beispiel die dekorative Repräsentation der Weihnachten.

## Revendications

1. Procédure de production des articles décoratifs et promotionnels, qui est composée de pas suivants:
- impression de deux feuilles plastiques sous forme plate par le moyen d'une machine à imprimer de type offset ou de sérigraphie.
- Formation de chaque des deux feuilles plastiques imprimées dans une machine à former sous vide afin d'obtenir deux portions à trois dimensions de ces deux feuilles imprimées, dont l'une est faite légèrement plus petite que l'autre et où un canal de configuration rectangulaire est formé autour la circonférence de chacune de deux portions à trois dimensions, ledit canal se composant d'un sous-sol ainsi qu'un bout sailli aux angles droits dudit sous-sol, afin de procurer des surfaces de centre entre les deux portions imprimées à trois dimensions.
- enlèvement aux ciseaux de la zone plate restante autour de chacune desdites deux portions imprimées à trois dimensions de l'article décoratif et promotionnel à trois dimensions, en poussant cette zone plate sous un coupeur horizontal.
- porter au contact lesdites deux portions imprimées à trois dimensions, en fixant ladite portion légèrement plus petite dans l'autre relativement plus grande à une position d'imminence qu'on peut obtenir du contact du bout de devant du bout sailli dudit canal de configuration rectangulaire de la portion légèrement plus petite sur le sous-sol dudit canal de configuration rectangulaire de l'autre relativement plus grande portion, en créant ainsi l'article décoratif et promotionnel à trois dimensions.

2. Article promotionnel ou décoratif composé de deux feuilles plastiques plates qui sont imprimées quand elles sont plates et ensuite formées sous vide et enlevées aux ciseaux afin d'obtenir deux portions imprimées à trois dimensions de l'article promotionnel ou décoratif, l'une desdites deux portions à trois dimensions étant légèrement plus petite que l'autre desdites deux portions imprimées à trois dimensions, chacune desdites deux portions imprimées à trois dimensions se composant d'un canal de circonférence de configuration rectangulaire, ledit canal se composant d'un sous-sol et d'un bout sailli aux angles droits dudit sous-sol, afin de procurer des surfaces de centre entre les deux portions imprimées à trois dimensions portées au contact en fixant la portion imprimée à trois dimensions légèrement plus petite dans l'autre relativement plus grande à une position d'imminence qu'on peut obtenir du contact du bout de devant du bout sailli dudit canal de configuration rectangulaire de la portion légèrement plus petite sur le sous-sol dudit canal de configuration rectangulaire de l'autre relativement plus grande portion, en créant ainsi l'article décoratif et promotionnel à trois dimensions.

3. Article promotionnel ou décoratif comme il est revendiqué dans la revendication 3 su-mentionnée, où l'article est illuminé à son intérieur.

4. Application de la procédure de production des articles décoratifs et promotionnels conformément à la revendication 1 dans la production d'articles complètement à trois dimensions ou des figures d'une configuration de circonférence plutôt anomale, comme les représentations décoratives du Père Noël.

5. L'article promotionnel ou décoratif de la revendication 3 adapté à la forme d'un article complètement à trois dimensions ou figure d'une configuration de circonférence anomale, comme une représentation décorative du Père Noël.
